Europäisches Patentamt

European Patent Office

Office européen des brevets

(19)

(11) Veröffentlichungsnummer: **0 140 074**
**B1**

(12) # EUROPÄISCHE PATENTSCHRIFT

(45) Veröffentlichungstag der Patentschrift:
31.05.89

(21) Anmeldenummer: 84110742.8

(22) Anmeldetag: 06.09.84

(51) Int. Cl.⁴: **B 60 C 15/02**, B 60 C 17/04,
B 60 B 21/10

(54) **Fahrzeugrad.**

(30) Priorität: 27.10.83 DE 3338971

(43) Veröffentlichungstag der Anmeldung:
08.05.85 Patentblatt 85/19

(45) Bekanntmachung des Hinweises auf die Patenterteilung:
31.05.89 Patentblatt 89/22

(84) Benannte Vertragsstaaten:
AT BE CH DE FR GB IT LI LU NL SE

(56) Entgegenhaltungen:
EP-A-0 111 118
EP-A-0 129 179
EP-A-0 131 117
DE-A-2 361 975
DE-C-75 352
GB-A-2 030 085
GB-A-2 061 199

(73) Patentinhaber: **Continental Aktiengesellschaft,
Königsworther Platz 1, D-3000 Hannover 1 (DE)**

(72) Erfinder: **Huinink, Heinrich, Dipl.- Ing.,
Elbingerstrasse 2 F, D-3008 Garbsen 1 (DE)**
Erfinder: **Frerichs, Udo, Buchenweg 7, D-3012
Langenhagen 8 (DE)**
Erfinder: **Poqué, Dionysius, Dipl.- Ing.,
Meischenfeld 17, D-5100 Aachen (DE)**

## Beschreibung

Die Erfindung betrifft ein luftbereiftes Fahrzeugrad mit einer starren, einteiligen Felge, die seitlich außen sich nach radial außen erstreckende Felgenhörner und neben diesen auf der radial äußeren Seite der Felge Sitzflächen für einen Fahrzeugluftreifen aufweist, der im wesentlichen aus Gummi oder gummiähnlichen Kunststoffen besteht und eine Karkasse aus textilen und/oder metallischen Festigkeitsträgern aufweist, die in den Wülsten mittels zugfester Kernringe verankert ist, wobei die Felge axial innen von den Sitzflächen mit einem Stützteil mit einem gegenüber dem von den Felgenhörnern gebildeten Durchmesser vergrößerten Durchmesser versehen ist, und der Kernring exzentrisch in einem drehbaren Wulst in der Weise angeordnet ist, daß beim montierten Reifen der Reifeninnendurchmesser im Wulstbereich kleiner ist als beim Reifen während der Montage.

Ein solches Fahrzeugrad wird in der am 27.12.84 veröffentlichten EP-A-0 129 179 (zitiert gemäß Art. 54(3) EPÜ) vorgeschlagen (siehe auch EP-B-0 131 117, veröffentlicht am 14.1.85). Beim Fahrzeugrad der EP-A-0 129 179 ist der Durchmesser der Notlaufstütze nur unwesentlich größer als der von den Felgenhörnern gebildete Außendurchmesser. Dies hat zur Folge, daß sich bei einem Notlauf im Bereich der Felgenhörner die Reifenwände innen berühren, was ohne zusätzliche Maßnahmen zu thermischen Problemen führen kann. Darüber hinaus sind bei dem vorbeschriebenen Fahrzeugrad die unteren Reifenseitenwände relativ steil gestellt, wie es bei den heute gebräuchlichen Reifen ebenfalls der Fall ist. Dies kann zu unerwünschten Rückwirkungen auf das Laufband führen.

Der Erfindung liegt die Aufgabe zugrunde, bei gleichzeitiger Erreichung einer zuverlässigen Notlauffähigkeit eine wesentliche Minimierung der Störgrößen zu erzielen, die der Reifenwulst über die Seitenwand auf das Laufband ausübt.

Diese Aufgabe wird erfindungsgemäß dadurch gelöst, daß die Reifenwand vom Kernring aus im Bereich des Felgenhorns flach nach seitlich außen verläuft, und zwar in einem Winkelbereich von 0° bis 20° zur Rotationsachse des Reifens, und daß die Karkaßneutrale diesen Bereich unter Vermeidung eines Wendepunktes durchläuft. Eine weitere Lösung der Aufgabe besteht darin, daß die Reifenwand vom Kernring aus im Bereich des Felgenhorns flach nach seitlich außen verläuft, und zwar in einem Winkelbereich von 0° bis 20° zur Rotationsachse des Reifens, und daß die Karkaßneutrale diesen Bereich unter Vermeidung eines Wendepunktes durchläuft, und daß die Vertiefung als Montagevertiefung ausgebildet ist.

Bei der Erfindung wird die Reifenseitenwand als Membran gelenkartig am Felgenhorn aufgehängt, wodurch auf eine steife und unbewegliche Wulstzone mit einem hohen Eigengewichtsanteil verzichtet werden kann.

Dadurch wird der Traganteil der Karkasse erheblich vermindert, woraus der Vorteil einer wesentlichen Steigerung des Fahrkomforts bei gleichem Reifeninnendruck resultiert.

Durch die Verminderung des Traganteils der Karkasse ergibt sich eine Minderbeanspruchung der Wulstzone mit großen Vorteilen vor allem bei LKW-Reifen. Während der Einspannbereich des Reifens völlig ruhig liegenbleibt, werden die auftretenden Kräfte durch eine Erhöhung des Winkelbereiches aufgefangen, in dem die Reifenseitenwand die Felge verläßt.

Weiterhin bedingt die gelenkartige und damit sehr flexible Anbindung der Reifenseitenwände eine günstige Ausbildung der Bodenaufstandsfläche, die weitgehend frei von Rückwirkungen aufgrund einer Steifigkeit der Reifenseitenwände ist. Hieraus resultiert eine homogene Druckverteilung in der Aufstandsfläche. Die Folge davon ist eine gleichmäßige Verteilung der Kraftschlußwerte im gesamten Bereich der Aufstandsfläche und damit eine Erhöhung des Kraftschlusses. Außerdem ergibt sich aus der homogenen Druckverteilung ein geringerer Abrieb und ein gleichmäßigeres Abriebbild.

Schließlich ergibt sich beim erfindungsgemäßen Fahrzeugrad ein geringerer Rollwiderstand dadurch, daß im Wulstbereich mit den relativ geringen Materialanteilen keine so große Verformungsarbeit und damit keine so hohe Wärmeentwicklung mehr auftritt.

Bei einem Notlauf, d. h. beim Fahren im drucklosen Zustand legt sich der Reifen auf die Felgenstützfläche und wölbt seitlich in der Weise aus, daß - im Gegensatz zu herkömmlichen Fahrzeugrädern - ein Berühren der Fahrbahn zuverlässig vermieden wird. Auch werden im inneren Seitenwandbereich Kontaktzonen mit hoher Reibung vermieden, die bei herkömmlichen Fahrzeugrädern bekanntlich zu einer schnellen Zerstörung des Reifens führen. Neben der Felgengestaltung sorgt die Auslegung des Reifens für einen hervorragenden Notlaufbetrieb. Infolge des geringen Traganteils der Karkasse durch die biegeweichen Seitenwände bis hin zum Felgenhorn wird die Verlustarbeit in diesem Bereich des Reifens nahezu eliminiert und damit eine Reifenzerstörung vermieden. Es sind bereits bei ersten Versuchen Fahrstrecken von bis zu 100 km bei einer Geschwindigkeit von ca. 80 km/h zurückgelegt worden, ohne daß sich irgendeine Schädigung des Reifens ergab. Da weiterhin eine wesentliche Beeinträchtigung des Fahrverhaltens bei einem Notlauf nicht vorliegt, sind die besten Voraussetzungen für einen Verzicht auf das bisher übliche Reserverad gegeben.

Durch die exzentrische Anordnung des Kernrings im Reifenwulst und die Drehbarkeit des Reifenwulstes bei der Montage kann auf ein Tiefbett üblicher Art völlig verzichtet werden, so daß sich der Vorteil eines größeren Einbauraums für die Bremsen ergibt.

Der Reifen läßt sich auf einteilige Feigen montieren, indem zur Oberwindung des Stützteils die Felge zunächst etwa senkrecht zum Reifen in diesen hineinbewegt und dann im Innenraum des Reifens gedreht wird.

Gegenüber Radsystemen, bei denen der Reifen radial innen an der Felge befestigt ist, ergibt sich der Vorteil einer einfacheren Reifenherstellung auf üblichen Maschinen und in Formen vorhandener Bauart.

Nachfolgend werden zwei Ausführungsbeispiele der Erfindung anhand einer Zeichnung erläutert.

Es zeigt

Fig. 1    ein Fahrzeugrad mit einer einteiligen Felge mit Stützfläche und mit einem Reifen, bei dem die Kernringe exzentrisch in den Wülsten gelagert sind, in einem radialen Teilschnitt,

Fig. 2    einen Ausschnitt des Fahrzeugrads nach Fig. 1 mit einem zur Montage des Reifens verdrehten Reifenwulst,

Fig. 3    das Fahrzeugrad gemäß Fig. 1 mit einer Notlaufstellung des Reifens in einem radialen Teilschnitt,

Fig. 4    ein Fahrzeugrad mit einer Felge mit Stützflächen und zwei seitlich davon angeordneten Montagevertiefungen in einem radialen Teilschnitt.

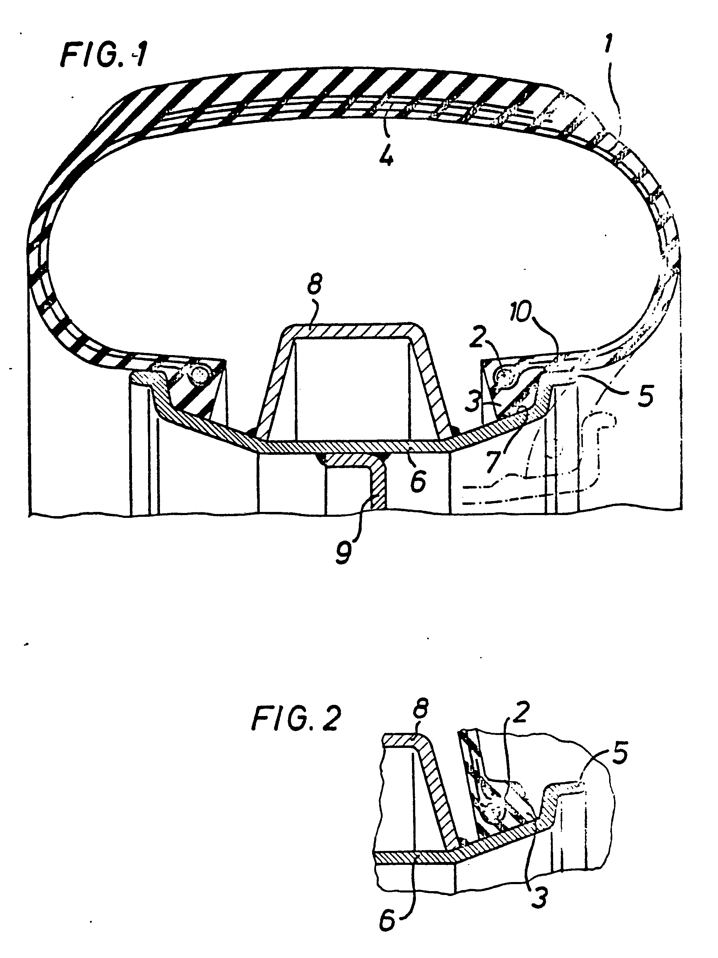

In Fig. 1 ist ein Fahrzeugrad mit einem montierten Reifen dargestellt. Ein im wesentlichen aus Gummi oder gummiähnlichen Kunststoffen bestehender Fahrzeugluftreifen ist vorliegend als Gürtelreifen mit einer Radialkarkasse 1 ausgebildet, die mit ihren Enden durch Umschlingen von zugfesten Kernringen 2 in den Wülsten 3 verankert ist. Zwischen dem Laufstreifen und der Karkasse 1 befindet sich ein üblicher Gürtel 4.

Die starre, einteilig ausgebildete Felge weist seitlich außen Felgenhörner 5 und neben diesen auf der radial äußeren Seite des Felgenkranzes 6 Sitzflächen 7 für den Reifen auf. Weiterhin befindet sich im mittleren Bereich auf der radial äußeren Seite des Felgenkranzes 6 ein Stützteil 8 mit einer Stützfläche für den Reifen, deren Durchmesser größer ist als der größte von den Felgenhörnern 5 gebildete Durchmesser. Die Begrenzung des Stützteildurchmessers nach oben hin ist durch die erforderliche Montierbarkeit des Reifens gegeben. Der Felgenkranz 6 ist in üblicher Heise an einer Felgenschüssel 9 befestigt. Bei Bedarf kann die Felgenschüssel 9 auch unmittelbar am Stützteil 8 angebracht sein.

Vom Wulst 3 mit dem exzentrisch darin angeordneten Kernring 2 aus verläuft die Reifenwand 10 nach seitlich außen hin extrem flach, so daß sie das Felgenhorn 5 unter einem Winkel von 0° bis 20°, bevorzugt ca. 5° zur Rotationsachse des Rades passiert, gemessen am aufgepumpten, unbelasteten Reifen. Bereits auf Höhe des Felgenhorns 5 ist die Reifenwand 10 nicht wesentlich dicker als im weiteren Seitenwandbereich.

Die Karkasse 1 ist in der Weise im Kernring 2 verankert, daß sich das umgeschlagene Karkaßende radial innen befindet. Sie weist bevorzugt einen Verlauf auf, bei dem die Karkaßneutrale in dem sich unmittelbar seitlich außen vom Kernring 2 anschließenden Bereich der Funktion einer Kettenlinie gehorcht und dann in einen von der Membrantheorie vorgegebenen Bereich übergeht, so daß sich an keiner Stelle ein Wendepunkt ergibt.

Die exzentrische Lagerung des Kernrings 2 im Wulst 3 zur Einsparung einer Montagevertiefung ist in der Weise vorzunehmen, daß sich beim Verschwenken des Wulstes 3 zur Montage des Reifens (Fig. 2) eine Vergrößerung des Reifeninnendurchmessers im Bereich des Wulstes 3 in dem Ausmaß ergibt, daß der Wulst 3, nachdem er auf einem Teilumfang auf die Felgensitzfläche 7 gebracht worden ist, auf dem Restumfang über das Felgenhorn 5 geschoben werden kann. Dazu ist der Abstand des Kernrings 2 vom der Felgensitzfläche 7 zugekehrten Wulstrand in der montierten Stellung des Reifens (Fig. 1) ausreichend größer zu wählen als in der Montagestellung (Fig. 2), da der zweifache Differenzbetrag zur Durchmesservergrößerung beiträgt. Als weitere Randbedingung sollte für eine genügend große Abwerfsicherheit die Kernringquerschnittsfläche zumindest zur Hälfte hinter dem Felgenhorn 5 eintauchen, d. h. daß der größte von den Felgenhörnern 5 gebildete Durchmesser gleich oder größer ist als der Mittendurchmesser (= Durchmesser von Querschnittsmittelpunkt zu Querschnittsmittelpunkt) der Kernringe 2. Einzelheiten für eine exzentrische Lagerung der Kernringe 2 zur Einsparung einer Montagevertiefung sind in der älteren Anmeldung P-3 244 046.4 beschrieben.

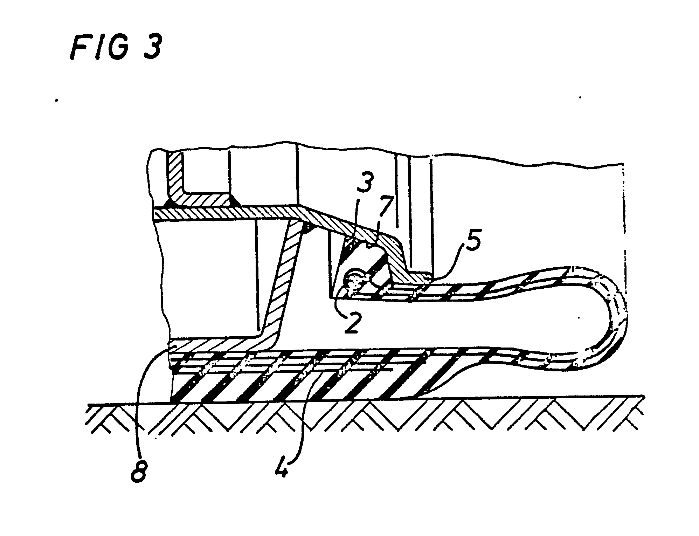

Fig. 3 zeigt den Reifen nach Fig. 1 in einer Notlaufstellung, in der er sich mit seiner Innenwand auf dem Felgenstützteil 8 abstützen kann. Es ist günstig, die Innenwand oder das Felgenstützteil 8 mit einem bekannten Gleitmittelbelag zu versehen. Aufgrund des extrem flachen Verlaufs der Reifenwand 10 im Bereich des Felgenhorns 5 kann die Seitenwand seitlich auswölben, ohne daß es zu einem Fahrbahnkontakt oder zu einem Kontakt von inneren Seitenwand teilen kommt.

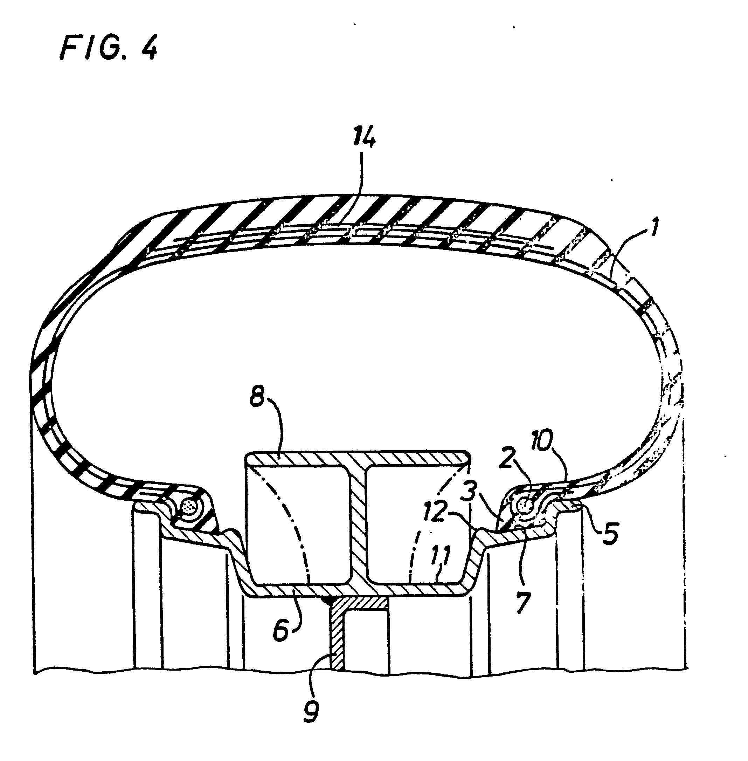

Das in Fig. 4 dargestellte zweite Ausführungsbeispiel der Erfindung unterscheidet sich von dem Fahrzeugrad nach Fig. 1 vor allem dadurch, daß neben dem T-förmigen Stützteil 8 (bei Bedarf kann das Stützteil 8 auch die gestrichelte Form annehmen) zwei kleine Montagevertiefungen 11 angeordnet sind. Dadurch ist es möglich, die Reifenwülste 3 in üblicher Weise mit etwa zentrisch angeordneten Kernringen 2 auszubilden, so daß die Reifenherstellung noch einfacher wird. Zum besseren Halten des Reifenwulstes 3 kann ein üblicher Hump 12 vorgesehen sein. Im übrigen gelten beim Aufbau von Reifen und Felge dieselben Oberlegungen wie beim Reifen nach Fig. 1.

Es sollte angemerkt werden, daß die vorliegende Erfindung nicht auf ein Fahrzeugrad mit den beschriebenen Gürtelreifen mit Radialkarkasse beschränkt ist, daß vielmehr auch andere Konstruktionsarten, z. B. mit Winkelkarkassen vorgesehen werden können. Die Erfindung ist außer bei PKW-Fahrzeugrädern auch bei anderen, insbesondere bei LKW-Rädern anwendbar.

**Patentansprüche**

1. Luftbereiftes Fahrzeugrad mit einer starren, einteiligen Felge (6, 9), die seitlich außen sich nach radial außen erstreckende Felgenhörner (5) und neben diesen auf der radial äußeren Seite der Felge Sitzflächen (7) für einen Fahrzeugluftreifen aufweist, der im wesentlichen aus Gummi oder gummiähnlichen Kunststoffen besteht und eine Karkasse (1) aus textilen und/oder metallischen Festigkeitsträgern aufweist, die in den Wülsten (3) mittels zugfester Kernringe (2) verankert ist, wobei die Felge axial innen von den Sitzflächen (7) mit einem Stützteil (8) mit einem gegenüber dem von den Felgenhörnern (5) gebildeten Durchmesser vergrößerten Durchmesser versehen ist, und der Kernring (2) exzentrisch in einem drehbaren Wulst (3) in der Weise angeordnet ist, daß beim montierten Reifen der Reifeninnendurchmesser im Wulstbereich kleiner ist als beim Reifen während der Montage, dadurch gekennzeichnet, daß die Reifenwand (10) vom Kernring (2) aus im Bereich des Felgenhorns (5) flach nach seitlich außen verläuft, und zwar in einem Winkelbereich von 0° bis 20° zur Rotationsachse des Reifens, und daß die Karkaßneutrale diesen Bereich unter Vermeidung eines Wendepunktes durchläuft.

2. Luftbereiftes Fahrzeugrad mit einer starren, einteiligen Felge (6, 9), die seitlich außen sich nach radial außen erstreckende Felgenhörner (5) und neben diesen auf der radial äußeren Seite der Felge Sitzflächen (7) für einen Fahrzeugluftreifen aufweist, der im wesentlichen aus Gummi oder gummiähnlichen Kunststoffen besteht und eine Karkasse (1) aus textilen und/oder metallischen Festigkeitsträgern aufweist, die in den Wülsten (3) mittels zugfester Kernringe (2) verankert ist, wobei die Felge axial innen von den Sitzflächen (7) mit einer Vertiefung (11) für jeden Reifenwulst (3) und weiterhin mit zumindest einem Stützteil (8) mit einem gegenüber dem von den Felgenhörnern (5) gebildeten Durchmesser vergrößerten Durchmesser versehen ist, dadurch gekennzeichnet, daß die Reifenwand (10) vom Kernring (2) aus im Bereich des Felgenhorns (5) flach nach seitlich außen verläuft, und zwar in einem Winkelbereich von 0° bis 20° zur Rotationsachse des Reifens, und daß die Karkaßneutrale diesen Bereich unter Vermeidung eines Wendepunktes durchläuft, und daß die Vertiefung (11) als Montagevertiefung ausgebildet ist.

3. Fahrzeugrad nach Anspruch 1 oder 2, dadurch gekennzeichnet, daß der größte Durchmesser der Felgenhörner (5) gleich oder größer ist als der Mittendurchmesser der Kernringe (2).

4. Fahrzeugrad nach Anspruch 1 oder 2, dadurch gekennzeichnet, daß die Karkaßneutrale in dem sich unmittelbar seitlich außen anschließenden Bereich vom Kernring (2) der Funktion einer Kettenlinie gehorcht.

5. Fahrzeugrad nach Anspruch 1 oder 2, dadurch gekennzeichnet, daß die Reifenwand (10) beim aufgepumten, aber unbelasteten Reifen im Bereich des Felgenhorns (5) nach seitlich außen unter einem Winkel von 0 bis 5° zur Rotationsachse des Rades ansteigt.

6. Fahrzeugrad nach Anspruch 1 oder 2, dadurch gekennzeichnet, daß die Karkasse (1) im Felgenhornbereich nahezu waagerecht verläuft, daß sie im Wulst (3) durch Umschlingen des Kernrings (2) verankert ist und daß sich das umgeschlagene Karkaßende auf der radial inneren Seite befindet.

7. Fahrzeugrad nach Anspruch 1 oder 2, dadurch gekennzeichnet, daß der Durchmesser des Stützteils (8) größer ist als der von den Felgenhörnern (5) und den Wanddicken der Reifenwand (10) gebildete Durchmesser.

**Claims**

1. Vehicle wheel fitted with a pneumatic tyre, having a rigid, one-piece rim (6, 9) which, laterally externally, has rim flanges (5), which extend radially outwardly, and seating surfaces (7) for a pneumatic vehicle tyre adjacent to the rim flanges on the radially outer surface of the rim, which tyre is substantially formed from rubber or rubber-like plastics materials and has a carcase (1), which is formed from textile and/or metallic reinforcing members and is secured in the beads (3) by means of substantially inextensible core rings (2), wherein the rim is provided, axially internally of the seating surfaces (7), with a supporting member (8) having a diameter which is greater than the diameter formed by the rim flanges (5), and the core ring (2) is eccentrically disposed in a rotatable bead (3) in such a manner that, when the tyre has been assembled, the internal diameter of the tyre is smaller in the bead region than is the case when the tyre is being assembled, characterised in that the tyre wall (10) extends laterally outwardly from the core ring (2) in the region of the rim flange (5) in a flat manner, such being in an angular sector of from 0° to 20° relative to the axis of rotation of the tyre, and in that the neutral line of the carcase passes through this sector so that a turning point is thereby avoided.

2. Vehicle wheel fitted with a pneumatic tyre, having a rigid, one-piece rim (6, 9) which, laterally externally, has rim flanges (5), which extend radially outwardly, and seating surfaces (7) for a pneumatic vehicle tyre adjacent to the rim flanges on the radially outer surface of the rim, which tyre is substantially formed from rubber or rubber-like plastics materials and has a carcase (1), which is formed from textile and/or metallic reinforcing members and is secured in the beads (3) by means of substantially inextensible core rings (2), wherein the rim is provided, axially internally of the seating surfaces (7), with a recess (11) for each tyre bead (3) and, in addition, with at least one supporting member (8) having a diameter which is greater than the diameter formed by the rim flanges (5), characterised in that the tyre wall (10) extends laterally outwardly from the core ring (2) in the region of the rim flange (5) in a flat manner, such being in an angular sector of from 0° to 20° relative to the axis of rotation of the tyre, and in that the neutral line of the carcase passes through this sector so that a turning point is thereby avoided, and in that the recess (11) is in the form of a mounting recess.

3. Vehicle wheel according to claim 1 or 2, characterised in that the maximum diameter of the rim flanges (5) is identical to, or greater than, the mean diameter of the core rings (2).

4. Vehicle wheel according to claim 1 or 2, characterised in that the neutral line of the carcase, in the region of the core ring (2) in direct lateral external communication, fulfils the function of a catenary curve.

5. Vehicle wheel according to claim 1 or 2, characterised in that, when the tyre is inflated but unloaded, the tyre wall (10) in the region of the rim flange (5) advances laterally outwardly at an angle of 0 to 5° relative to the axis of rotation of the wheel.

6. Vehicle wheel according to claim 1 or 2, characterised in that the carcase (1) extends virtually horizontally in the region of the rim flange, in that it is secured in the bead (3) by being looped around the core ring (2), and in that the bent-over end of the carcase is situated on the radially internal surface.

7. Vehicle wheel according to claim 1 or 2, characterised in that the diameter of the supporting member (8) is greater than the diameter formed by the rim flanges (5) and the wall thicknesses of the tyre wall (10).

**Revendications**

1. Roue de véhicule équipée d'un pneumatique et comprenant une jante monobloc rigide (6, 9), qui comporte, extérieurement sur le côté latéral, des rebords (5) s'étendant radialement vers l'extérieur et, à côté de ces derniers, sur le côté de la jante situé à l'extérieur du point de vue radial, des surfaces d'appui (7) pour un pneumatique de véhicule, est constituée essentiellement par du caoutchouc ou des matières plastiques analogues à du caoutchouc et possède une carcasse (1) formée par des éléments renforçateurs textiles et/ou métalliques, qui sont ancrés dans les talons (3) à l'aide de tringles annulaires (2) résistantes à la traction, la jante comprenant, intérieurement du point de vue axial, par rapport aux surfaces d'appui (7), un élément d'appui (8) possédant un diamètre supérieur au diamètre délimité par les rebords (5) de la jante, et la tringle annulaire (2) étant disposée d'une manière excentrée dans un talon (3) apte à pivoter, de telle sorte que le diamètre intérieur du pneumatique à l'état monté est plus faible que pendant son montage, dans la zone du talon, caractérisée en ce que la paroi (10) du pneumatique s'étend à plat latéralement vers l'extérieur à partir de la tringle annulaire (2), dans la zone du rebord (5) de la jante, et ce en faisant par rapport à l'axe de rotation un angle se situant dans une gamme allant de 0° à 20°, et que la ligne neutre de la carcasse traverse cette zone sans formation d'un point d'inflexion.

2. Roue de véhicule équipée d'un pneumatique et comprenant une jante monobloc rigide (6, 9), qui comporte, extérieurement sur le côté latéral, des rebords (5) s'étendant radialement vers l'extérieur et, à côté de ces derniers, sur le côté de la jante situé à l'extérieur du point de vue radial, des surfaces d'appui (7) pour un pneumatique de véhicule, est constituée essentiellement par du caoutchouc ou des matières plastiques analogues à du caoutchouc et possède une carcasse (1) formée par des éléments renforçateurs textiles et/ou métalliques, qui sont ancrés dans les talons (3) à l'aide de tringles annulaires (2) résistantes à la traction, la jante comprenant, intérieurement du point de vue axial, par rapport aux surfaces d'appui (7), un renfoncement (11) pour chaque talon (3) du pneumatique et en outre au moins une partie de support (8) possédant un diamètre supérieur au diamètre délimité par les rebords (5) de la jante, caractérisée en ce que la paroi (10) du pneumatique s'étend à plat latéralement vers l'extérieur à partir de la tringle annulaire (2), dans la zone du rebord (5) de la jante, et ce en faisant par rapport à l'axe de rotation un angle se situant dans une gamme allant de 0 à 20°, que la ligne neutre de la carcasse traverse cette zone sans formation d'un point d'inflexion, et que le renfoncement (II) est réalisé sous la forme d'un renfoncement de montage.

3. Roue de véhicule selon la revendication 1 ou 2, caractérisée en ce que le diamètre au maximum des rebords (5) de la jante est égal ou supérieur au diamètre médian des tringles annulaires (2).

4. Roue de véhicule selon la revendication 1 ou 2, caractérisée en ce que la ligne neutre de la carcasse située dans la zone voisine de la tringle annulaire (2) et se raccordant directement latéralement à l'extérieur possède la forme d'une chaînette.

5. Roue de véhicule selon la revendication 1 ou 2, caractérisée en ce que, lorsque le pneumatique est gonflé, mais non soumis à une charge, la paroi (10) du pneumatique remonte latéralement vers l'extérieur, au voisinage du rebord (5) de la jante, en faisant par rapport à l'axe de rotation de la roue un angle compris entre 0 et 5°.

6. Roue de véhicule selon la revendication 1 ou 2, caractérisée en ce que la carcasse (1) s'étend approximativement horizontalement au voisinage du rebord de la jante et est ancrée dans le talon (3) par le fait qu'elle s'enroule autour de la tringle annulaire (2), et que l'extrémité repliée de la carcasse est située sur le côté intérieur du point de vue radial.

7. Roue de véhicule selon la revendication 1 ou 2, caractérisée en ce que le diamètre de l'élément de support (8) est supérieur au diamètre formé par les rebords (5) de la jante et les épaisseurs de la paroi (10) du pneumatique.

FIG. 1

FIG. 2

FIG 3

FIG. 4